# EUROPEAN PATENT APPLICATION

(11) **EP 4 012 254 A1**
(43) Date of publication of application: **15.06.2022**
(21) Application number: 21162966.2
(22) Date of filing: 16.03.2021
(51) Int. Cl.: F21V 8/00, G02F 1/13357

(54) **LIGHT GUIDE PLATE STRUCTURE, DISPLAY DEVICE AND ELECTRONIC DEVICE**

(30) Priority: 09.12.2020 CN 202011448589
(71) Applicant: JRD Communication (Shenzhen) Ltd, Shenzhen, Guangdong 518052 (CN)
(72) Inventor: LIN, Ke, Shenzhen, Guangdong 518052 (CN); CHEN, Ping, Shenzhen, Guangdong 518052 (CN); QIU, Zhuwei, Shenzhen, Guangdong 518052 (CN)
(74) Representative: Murgitroyd & Company

(57) **Abstract**

Provided are a light guide plate structure, a display device, and an electronic device. The light guide plate structure includes : a light guide plate (1), a first end surface (11) of the light guide plate (1) including a plurality of groove-shaped structures (111) disposed therein, the groove-shaped structures (111) configured to refract light emitted by a side light source (2), a second end surface (12) of the light guide plate (1) including a plurality of prisms (121) disposed therein, the prisms (121) configured to refract light emitted by the side light source (2), the groove-shaped structures (111), the prisms (121), and the light guide plate (1) being formed as an integrated structure, and the first end surface (11) of the light guide plate (1) and the second end surface (12) of the light guide plate (1) being two opposite surfaces.

## Description

### TECHNICAL FIELD

The present disclosure relates to a technology field of display technologies, and more particularly to a light guide plate structure, a display device and an electronic device.

### BACKGROUND

With the continuous development of communication technologies, a large number of electronic devices, such as smart phones, tablet computers and notebook computers, are popularized and applied. The electronic devices are developing in a diverse and personalized direction and increasingly become indispensable electronic devices in people's life and work. Nowadays, the electronic devices, such as mobile phones and tablet computers, have become electronic devices which people carry daily. An application industry of the electronic devices, for example, game software, video software, or work software, is developing rapidly. The electronic devices are usually equipped with displays, for example, liquid crystal displays (Liquid Crystal Display, LCD) or active-matrix organic light-emitting diode (AMOLED) panel. The LCDs and AMOLED panels require backlight or self-luminous light sources to be lighted up. Blue light carried by the light sources is harmful to human eyes. Therefore, display manufacturers have introduced reflective liquid crystal displays (RLCD) which do not require backlight or a self-luminous light source. A light-luminous principle of an RLCD is to coat a reflective layer inside the RLCD to achieve luminous effect by absorbing and reflecting natural light from outside. However, in a case of a dark night, weak external light or no external light, it is necessary to add a side light source in the RLCD to meet the case that the external light is insufficient.

During the research and practice of the prior art, the inventors of embodiments of the present disclosure find that a light guide plate of a current total reflective display panel has a flat design. As such, most light from a side light source cannot be refracted and reflected to the total reflective display panel via the light guide plate. This results in low working efficiency of a front light source and affects product performance.

### SUMMARY OF DISCLOSURE

Embodiments of the present disclosure provide a light guide plate structure, a display device, and the electronic device capable of solving the problem of low working efficiency.

In a first aspect, an embodiment of the present disclosure provides a light guide plate structure. The light guide plate structure includes: a light guide plate, a first end surface of the light guide plate including a plurality of groove-shaped structures disposed therein, the groove-shaped structures configured to refract light emitted by a side light source, a second end surface of the light guide plate including a plurality of prisms disposed therein, the prisms configured to refract light emitted by the side light source, the groove-shaped structures, the prisms, and the light guide plate being formed as an integrated structure, the first end surface of the light guide plate and the second end surface of the light guide plate being two opposite surfaces, and the second end surface of the light guide plate being close to a display panel.

In some embodiments, the groove-shaped structures are circular grooves, and inner surfaces of the circular grooves are spherical surfaces.

In some embodiments, the groove-shaped structures are rectangular grooves, and inner surfaces of the rectangular grooves are circular arcs.

In some embodiments, distances between two adjacent ones of the groove-shaped structures are unequal or equal.

In some embodiments, sizes of the groove-shaped structures from one side of the first end surface to the other side of the first end surface are from small to large.

In some embodiments, the groove-shaped structures from one side of the first end surface to the other side of the first end surface are arranged from dense to sparse.

In some embodiments, distances between two adjacent ones of the prisms arranged in the second end surface are equal or unequal.

In some embodiments, heights of two adjacent ones of the prisms are equal or unequal.

In a second aspect, an embodiment of the present disclosure provides a display device. The display device includes: a side light source, a light guide plate, and a display panel. A first end surface of the light guide plate includes a plurality of groove-shaped structures disposed therein. The groove-shaped structures are configured to refract light emitted by the side light source. A second end surface of the light guide plate includes a plurality of prisms disposed therein. The prisms are configured to refract light emitted by the side light source. The groove-shaped structures, the prisms, and the light guide plate are formed as an integrated structure. The first end surface of the light guide plate and the second end surface of the light guide plate are two opposite surfaces. The second end surface of the light guide plate are close to the display panel.

In a third aspect, an embodiment of the present disclosure provides an electronic device. The electronic device includes the above-mentioned display device.

The embodiments of the present disclosure provides the light guide plate structure, the display device, and the electronic device. The groove-shaped structures are disposed in the first end surface to refract light emitted by the side light source, thereby decreasing light which directly passes through the first end surface and guide light to propagate toward the prisms and the RLCD panel. The prims are disposed in the second end surface. Light emitted by the side light source are refracted by the prisms to propagate toward the RLCD panel. The light emitted by the side light source is refracted to the RLCD panel by the groove-shaped structures and the prisms 121, and then the refracted light is reflected by the RLCD panel. The light guide plate structure provided by the embodiment of the present disclosure can refract the light emitted by the side light source to be farther, so as to provide light for an area of the RLCD panel far away from the side light source. As such, most of the light emitted by the side light source can be refracted and reflected by the light guide plate to the RLCD panel, thereby increasing use efficiency of the side light source and improving product performance.

### BRIEF DESCRIPTION OF DRAWINGS

In order to illustrate the technical schemes in the embodiments of the present disclosure more clearly, the following drawings of the embodiments will be briefly introduced. It is obvious that the drawings are merely some embodiments of the present disclosure, those skilled in the art may derive other drawings according to the drawings described below without creative endeavor.
FIG. 1 illustrates a first structural diagram of a light guide plate structure provided by an embodiment of the present disclosure.
FIG. 2 illustrates a second structural diagram of a light guide plate structure provided by an embodiment of the present disclosure.
FIG. 3 illustrates a third structural diagram of a light guide plate structure provided by an embodiment of the present disclosure.
FIG. 4 illustrates a structural diagram of an electronic device provided by an embodiment of the present disclosure.

### DETAILED DESCRIPTION OF EMBODIMENTS

A clear and complete description of the technical schemes in the embodiments of the present disclosure is made in conjunction with the accompanying drawings in the embodiments of the present disclosure. The described embodiments are merely a part and not all of the embodiments of the present disclosure. Based on the embodiments of the present disclosure, all other embodiments acquired by one of ordinary skill in the art without any inventive efforts are within the scope of protection of the present disclosure.

In the description of the present disclosure, it should be understood that the terms "first" and "second" are for descriptive purposes only and should not be construed as indicating or implying relative importance or implying the number of technical features. As such, the features defined by the term "first" and "second" may include one or more of the features explicitly or implicitly. In the description of the present disclosure, the term "more" refers two or more than two, unless otherwise specifically defined.

The following description provides various embodiments or examples for implementing various structures of the present disclosure. To simplify the description of the present disclosure, parts and settings of specific examples are described as follows. Certainly, they are only illustrative, and are not intended to limit the present disclosure. Further, reference numerals and reference letters may be repeated in different examples. This repetition is for purposes of simplicity and clarity and does not indicate a relationship of the various embodiments and/or the settings. Furthermore, the present disclosure provides specific examples of various processes and materials, however, applications of other processes and/or other materials may be appreciated those skilled in the art. In the embodiments, the description of the various embodiments has respective different emphases, and a part in one of the embodiments which is not described in detail can be referred to the related description of other embodiments.

Embodiments of the present disclosure provide a light guide plate structure, a display device and an electronic device. The display device can be used in combination with the electronic device, such as a smart mobile phone, a tablet computer, a notebook computer or a personal computer. The light guide plate structure, the display device and the electronic device will be described in detail as follows. It is noted that a described order of the following embodiments does not serve as limitations of a preferred order of the embodiments.

The light guide plate structure provided by an embodiment of the present disclosure can be applied to a reflective liquid crystal display (RLCD) panel. The RLCD panel is a screen which does not emit light. Compared to a conventional transmissive LCD panel, the total reflective display panel does not include a backlight source disposed therein. The total reflective display panel displays an image via total reflection of environmental light. Display effect of the transmissive LCD panel depends on a backlight source disposed therein. Display effect of the total reflective display panel depends on the environmental light. The light guide plate structure provided by the embodiment of the present disclosure can increase a reflectivity of the total reflective display panel and improve product performance.

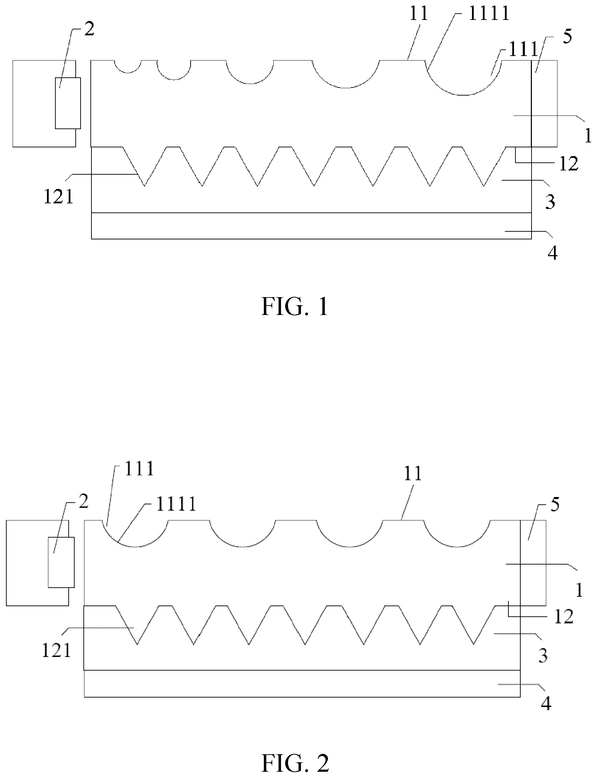

A detailed description of the present disclosure is made in conjunction with the accompanying drawings and the embodiments. Please refer to FIG. 1 to FIG. 4.

Please refer to FIG. 1. FIG. 1 illustrates a light guide plate structure provided by an embodiment of the present disclosure. The light guide plate structure includes a light guide plate 1. A first end surface 11 of the light guide plate 1 includes a plurality of groove-shaped structures 111 disposed therein. The groove-shaped structures 111 are configured to refract light emitted by a side light source 2. A second end surface 12 of the light guide plate 1 includes a plurality of prisms 121 disposed therein. The prisms 121 are configured to refract light emitted by the side light source 2. The groove-shaped structures 111, the prisms 121, and the light guide plate 1 are formed as an integrated structure. The first end surface 11 of the light guide plate 1 and the second end surface 12 of the light guide plate 1 are two opposite surfaces. The second end surface 12 of the light guide plate 1 is close to a display panel 4.

Please refer to FIG. 1 and FIG. 2. Optionally, in the embodiment of the present disclosure, the groove-shaped structures 111 are circular grooves, and inner surfaces 1111 of the circular grooves are spherical surfaces. Distances between two adjacent ones of the groove-shaped structures 111 are unequal or equal. The groove-shaped structures 111 can be distributed regularly or irregularly. It can be seen from a cross section and a longitudinal section of the light guide plate 1 that the circular grooves are circular in a cross section of the first end surface 11, and the circular grooves are arched in a longitudinal section of the second end surface 12. For example, as shown in FIG. 1, the groove-shaped structures 111 are circular grooves, and the inner surfaces 1111 of the circular grooves are spherical surfaces. Sizes of two adjacent ones of the circular grooves are different. Distances between two adjacent ones of the groove-shaped structures 111 are unequal. The groove-shaped structures 111 can be distributed irregularly. Please refer to FIG. 2. The groove-shaped structures 111 are circular grooves, and the inner surfaces 1111 of the circular grooves are spherical surfaces. Sizes of two adjacent ones of the circular grooves are the same. Distances between two adjacent ones of the groove-shaped structures 111 are equal. The groove-shaped structures 111 can be distributed regularly.

Optionally, in the embodiment of the present disclosure, the groove-shaped structures 111 are circular grooves, and the inner surfaces of the circular grooves 111 are spherical surfaces. The sizes of the circular grooves are the same.

Optionally, in an embodiment of the present disclosure, the groove-shaped structures 111 are circular grooves, and the inner surfaces of the circular grooves 111 are spherical surfaces. The sizes of the circular grooves are different. The sizes of the groove-shaped structures 111 from one side of the first end surface 11 to the other side of the first end surface 11 are from small to large.

Optionally, in an embodiment of the present disclosure, the groove-shaped structures 111 are rectangular grooves, and inner surfaces 1111 of the rectangular grooves 111 are circular arcs. Distances between two adjacent ones of the groove-shaped structures 111 are unequal or equal. The groove-shaped structures 111 can be distributed regularly or irregularly. It can be seen from the cross section and the longitudinal section of the light guide plate 1 that the rectangular grooves are rectangular in the cross section of the first end surface 11, and the rectangular grooves are arched in the longitudinal cross section of the second end surface 12.

Specifically, in an embodiment of the present disclosure, distances between two adjacent ones of the groove-shaped structures 111 are unequal or equal.

Optionally, in an embodiment of the present disclosure, sizes of the groove-shaped structures 111 from one side of the first end surface 11 to the other side of the first end surface 11 are from small to large.

Specifically, in an embodiment of the present disclosure, the groove-shaped structures 111 from one side of the first end surface 11 to the other side of the first end surface 11 are arranged from dense to sparse.

Please refer to FIG. 1 and FIG. 2. Specifically, in the embodiment of the present disclosure, distances between two adjacent ones of the prisms 121 arranged in the second end surface 12 are equal or unequal. Each of the prisms 121 has a plurality of refracting surface. Heights of two adjacent ones of the prisms 121 are equal or unequal.

Optionally, the first end surface 11 of the light guide plate 1 includes a plurality of groove-shaped structures 111 disposed therein. The groove-shaped structures 111 include circular grooves and rectangular grooves. That is, the first end surface 11 of the light guide plate 1 includes a plurality of circular grooves and a plurality of rectangular grooves disposed therein. The circular grooves and the rectangular grooves can be arranged in the first end surface 11 by intervals or interlacedly. Alternatively, the circular grooves and the rectangular grooves can be arranged in the first end surface 11 irregularly.

Optionally, in an embodiment of the present disclosure, a material of the light guide plate 1 can be a high transparence material. The material of the light guide plate 1 can be Polycarbonate (PC) or PolyMethyl MethAcrylate (PMMA).

Specifically, the groove-shaped structures 111 in the first surface end 11 are formed by an etching method, a dotting method, a coating method, or a laser engraving method. The prisms 121 in the second end surface 12 are formed by an etching method, a coating method, or a laser engraving method.

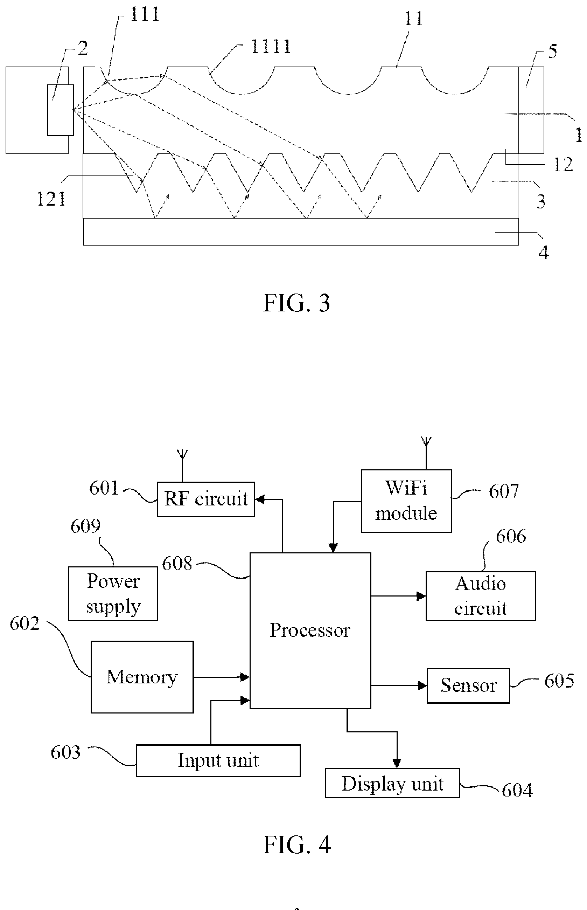

Please refer to FIG. 3. The light guide plate structure provided by the embodiment of the present disclosure can refract, via the groove-shaped structures 111 and prisms 121, light emitted by the side light source 2 for the RLCD panel to reflect. The light guide plate structure provided by the embodiment of the present disclosure can refract the light emitted by the side light source 2 to be farther, so as to provide light for an area of the RLCD panel far away from the side light source 2.

In summary, the embodiments of the present disclosure provide the light guide plate structures. The groove-shaped structures 111 are disposed in the first end surface 11 to increase refraction of light emitted by the side light source 2. The light refracted by the groove-shaped structures 111 propagates toward the prisms 121 and the RLCD panel. The prims 121 are disposed in the second end surface 12. Light emitted by the side light source 2 is refracted by the prisms 121 to propagate toward the RLCD panel. As such, most of the light emitted by the side light source 2 can be refracted and reflected by the light guide plate 1 to the RLCD panel, thereby increasing use efficiency of the side light source 2 and improving product performance.

The light guide plate structures in the embodiments of the present disclosure are described as above. A display device which can be used with the light guide plate structures is described as follows. An embodiment of the present disclosure further provides a display device. The device includes a side light source 2, a light guide plate 1, an optical adhesive 3, a display panel 4, and a reflective sheet 5. The side light source 2 is disposed at a first side of the light guide plate 1. The optical adhesive 3 is used for adhering a second end surface 12 of the light guide plate 1 to one end surface of the display panel 4. The reflective sheet 5 is fixed on a second side of the light guide plate 1. The first side of the light guide plate 1 and the second side of the light guide plate 1 are two opposite sides. The light guide plate 1 includes a first end surface 11 and the second end surface 12. The first end surface 11 of the light guide plate 1 includes a plurality of groove-shaped structures 111 disposed therein. The groove-shaped structures 111 are configured to refract light emitted by the side light source 2. The second end surface 12 of the light guide plate 1 includes a plurality of prisms 121 disposed therein. The prisms 121 are configured to refract light emitted by the side light source 2. The groove-shaped structures 111, the prisms 121, and the light guide plate 1 are formed as an integrated structure. The first end surface 11 of the light guide plate 1 and the second end surface 12 of the light guide plate 1 are two opposite surfaces. The second end surface 12 of the light guide plate 1 is close to the display panel 4. The display panel 4 is an RLCD panel.

Optionally, in an embodiment of the present disclosure, distances between two adjacent ones of the groove-shaped structures 111 are unequal or equal. The groove-shaped structures 111 are circular grooves, and inner surfaces 1111 of the circular grooves are spherical surfaces. Sizes of the circular grooves are the same or different. The sizes of the groove-shaped structures 111 from one side of the first end surface 11 to the other side of the first end surface 11 are from small to large. The groove-shaped structures 111 can be distributed regularly or irregularly. It can be seen from a cross section and a longitudinal section of the light guide plate 1 that the circular grooves are circular in a cross section of the first end surface 11, and the circular grooves are arched in a longitudinal section of the second end surface 12. In another embodiment, the groove-shaped structures 111 are rectangular grooves, and inner surfaces 1111 of the circular grooves 111 are circular arcs. Distances between two adjacent ones of the groove-shaped structures 111 are unequal or equal. The groove-shaped structures 111 can be distributed regularly or irregularly. It can be seen from the cross section and the longitudinal section of the light guide plate 1 that the rectangular grooves are rectangular in the cross section of the first end surface 11, and the rectangular grooves are arched in the longitudinal cross section of the second end surface 12. In an embodiment of the present disclosure, distances between two adjacent ones of the prisms 121 arranged in the second end surface 12 are equal or unequal. Each of the prisms 121 has a plurality of refracting surface.

The light guide plate structures and the display device in the embodiments of the present disclosure are described as above. An embodiment of the present disclosure further provides an electronic device. As shown in FIG. 4, FIG. 4 illustrates a structural diagram of an electronic device provided by an embodiment of the present disclosure. The electronic device may be a mobile phone, a computer, a digital broadcast electronic device, a messaging device, a gaming console, a tablet, a medical device, an exercise device, a personal digital assistant and the like.

As shown in FIG. 4, the electronic device may include a radio frequency (RF) circuit 601, a memory 602 including one or more computer readable storage mediums, an input unit 603, a display unit 604, a sensor 605, an audio circuit 606, a Wireless Fidelity (WiFi) module 607, a processor 608 including one or more processing cores, a power supply 609 and the like. Those skilled in the art can understand that the electronic device is not limited to the structure shown in FIG. 4, and may include more or fewer parts than those shown in FIG. 4, or some parts may be combined, or different arrangement of parts may be adopted.

The RF circuit 601 may be configured to receive and send information, or receive and send a signal in a call process. In particular, after downlink information of a base station is received, the downlink information is sent to the one or more processor for processing. In addition, uplink data is sent to the base station. Generally, the RF circuit 601 includes but is not limited to an antenna, at least one amplifier, a transceiver, a coordinator, one or more resonators, a subscriber identification module (SIM) card, a transceiver, a coupler, a Low Noise Amplifier (LNA), a duplexer, and the like. In addition, the RF circuit 601 may further communicate with a network and another device by means of wireless communication. The wireless communication may use any communications standard or protocol, including but not limited to Global System of Mobile Communication (GSM), General Packet Radio Service (GPRS), Code Division Multiple Access (CDMA), Wideband Code Division Multiple Access (WCDMA), Long Term Evolution (LTE), an email, a Short Messaging Service (SMS), or the like.

The memory 602 may be configured to store software programs and modules. By running the software programs and the modules stored in the memory 602, the processor 608 executes various function applications and performs data processing. The memory 602 may mainly include a program storage area and a data storage area. The program storage area may store an operating system, at least one application program required for at least one function (such as a sound playback function or an image playback function), or the like. The data storage area may store data (such as audio data or a phone book) created according to use of the electronic device or the like. In addition, the memory 602 may include a high-speed random access memory, and may further include a non-volatile memory such as at least one magnetic disk storage component, a flash memory component, or another volatile solid-state storage component. Correspondingly, the memory 602 may further include a memory controller for providing access of the processor 608 and the input unit 603 to the memory 602.

The input unit 603 may be configured to receive input number or character information and to generate keyboard, mouse, joystick, optical or trajectory ball signal inputs related to a user's setting and functional control. In detail, the input unit 603 may include a touch-sensitive surface and other input device. The touch-sensitive surface, also called a touch display screen or a touch panel, may be configured to detect touch operations of a user on or near the touch-sensitive surface (for example, operations carried out by the user through any suitable objects or attachments, such as a finger, a touch pen and the like, on the touch-sensitive surface or near the touch-sensitive surface) and to drive a corresponding device connected therewith according to a preset program. Optionally, the touch-sensitive surface may include a touch detection device and a touch controller. The touch detection device detects the touch direction of the user, detects a signal caused by the touch operation and transmits the signal to the touch controller. The touch controller receives touch information from the touch detection device, converts the touch information into a contact coordinate and then transmits the contact coordinate to the processor 608 and may receive a command transmitted by the processor 608 and execute the command. Moreover, the touch-sensitive surface may be one of various types, such as a resistance type, a capacitance type, an infrared type, a surface acoustic wave type and the like. Besides the touch-sensitive surface, the input unit 603 also may include other input device. In detail, other input device may include, but is not limited to, one or more of a physical keyboard, function keys (such as a volume control key, a switching key and the like), a trackball, a mouse, a joystick and the like.

The display unit 604 may be configured to display information input by the user or information provided for the user and various graphical user interfaces of the electronic device. The graphical user interfaces may be constituted by graphics, texts, icons, videos and any combinations of them. The display unit 604 may include a display panel. Optionally, the display panel may be configured in forms of a Liquid Crystal Display (LCD), an Organic Light-Emitting Diode (OLED) and the like. Furthermore, the touch panel may cover the display panel. When the touch-sensitive surface detects a touch operation on or near it, the signal caused by the touch operation is transmitted to the processor 608 to determine the type of a touch event. Then, the processor 608 provides a corresponding visual output on the display panel according to the type of the touch event. In the embodiments of the present disclosure, the display unit 604 is a display device. The display device includes a side light source, a light guide plate, an optical adhesive, a display panel, and a reflective sheet. The side light source is disposed at a first side of the light guide plate. The optical adhesive is used for adhering a second end surface of the light guide plate to one end surface of the display panel. The reflective sheet is fixed on a second side of the light guide plate. The first side of the light guide plate and the second side of the light guide plate are two opposite sides. The light guide plate includes a first end surface and the second end surface. The first end surface of the light guide plate includes a plurality of groove-shaped structures disposed therein. The groove-shaped structures are configured to refract light emitted by the side light source. The second end surface of the light guide plate includes a plurality of prisms disposed therein. The prisms are configured to refract light emitted by the side light source. The groove-shaped structures, the prisms, and the light guide plate are formed as an integrated structure. The first end surface of the light guide plate and the second end surface of the light guide plate are two opposite surfaces. The second end surface of the light guide plate is close to the display panel. The display panel is an RLCD panel.

The electronic device may further include at least one sensor 605, such as an optical sensor, a motion sensor and other sensors. In detail, the optical sensor may include an environmental light sensor and a proximity sensor. The environmental light sensor may adjust brightness of the display panel according to the lightness of environmental light. The proximity sensor may turn off the display panel and/or backlight when the electronic device approaches an ear. As one type of the motion sensor, an accelerometer sensor may detect the value of an acceleration in each direction (generally in three axial directions), may detect the value and the direction of gravity in a static state, which may be used in posture identifying functions (such as switching between a horizontal screen and a vertical screen, switching related to a game, and calibration on the posture of a magnetometer), vibration identifying functions (such as for pedometer and striking) and the like. Furthermore, a gyroscope, a barometer, a humidity meter, a thermometer, an infrared sensor and other sensors may be integrated into the electronic device, and explanations are not repeated herein.

The audio circuit 606, a speaker and a microphone may provide an audio interface between the user and the electronic device. The audio circuit 606 may transmit an electric signal obtained by converting received audio data to the speaker. The electric signal is converted into a sound signal to be outputted by the speaker. On the other hand, the microphone converts a collected sound signal into an electric signal. The audio circuit 606 receives the electric signal and converts the electric signal into audio data. After the audio data is outputted to the processor 608 and is processed, it is transmitted, for example, to another electronic device through the RF circuit 601, or is outputted to the memory 602 in order to be further processed. The audio circuit 606 may further include an ear plug hole for providing communication between an external earphone and the electronic device.

WiFi belongs to a short-distance wireless transmission technology. The electronic device may help a user receive and send emails, browse web pages, access stream media, and so on through the WiFi module 607. FIG. 4 shows the WiFi module 607. However, it should be understood that the WiFi module 607 is not a mandatory component of the electronic device, and may be omitted as required without changing the essence of the present disclosure.

The processor 608 is a control center of the electronic device, is connected with all the parts of the whole electronic device by various interfaces and lines and is configured to execute various functions of the electronic device and process the data by operating the software programs and/or the modules stored in the memory 602, and to call the data stored in the memory 602 so as to carry out integral monitoring on the electronic device. Optionally, the processor 608 may include one or more processing cores. Preferably, the processor 608 may be integrated with an application processor and a modulation/demodulation processor. The application processor is mainly configured to process an operating system, at least one user interface, at least one application and the like. The modulation/demodulation processor is mainly configured to process wireless communication. It should be understood that the modulation/demodulation processor may also be not integrated into the processor 608.

The electronic device further includes the power supply 609 (such as a battery) for supplying power to each part. Preferably, the power supply 609 may be logically connected with the processor 608 by a power supply management system, so as to implement functions of charge management, discharge management, power consumption management and the like by the power supply management system. The power supply 609 may further include one or more direct current or alternating current power supplies, recharging systems, power supply failure detection circuits, power converters or inverters, power supply status indicators and the like.

Although not shown in the FIG. 4, the electronic device may further include a camera, a BLUETOOTH module, and the like which are not further described herein. The processor 608 in the electronic device loads, into the memory 602 according to the instructions, executable files corresponding to processes of one or more application programs, and the processor 608 runs the application programs stored in the memory 602 to implement various functions.

It should be understood that present disclosure is not limited to the exemplary examples. Those skilled in the art in the art may achieve equivalent improvements or replacements according to the above description. The equivalent improvements and replacements should be considered to belong to the protection scope of the present disclosure.

## Claims

1. A light guide plate structure, **characterized by** comprising:
a light guide plate (1), a first end surface (11) of the light guide plate (1) comprising a plurality of groove-shaped structures (111) disposed therein, the groove-shaped structures (111) configured to refract light emitted by a side light source (2), a second end surface (12) of the light guide plate (1) comprising a plurality of prisms (121) disposed therein, the prisms (121) configured to refract light emitted by the side light source (2), the groove-shaped structures (111), the prisms (121), and the light guide plate (1) being formed as an integrated structure, the first end surface (11) of the light guide plate (1) and the second end surface (12) of the light guide plate (1) being two opposite surfaces, and the second end surface (12) of the light guide plate (1) being close to a display panel (4).

2. The light guide plate structure of claim 1, **characterized in that** the groove-shaped structures (111) are circular grooves, and inner surfaces of the circular grooves are spherical surfaces.

3. The light guide plate structure of claim 1, **characterized in that** the groove-shaped structures (111) are rectangular grooves, and inner surfaces of the rectangular grooves are circular arcs.

4. The light guide plate structure of claim 1, **characterized in that** distances between two adjacent ones of the groove-shaped structures (111) are unequal or equal.

5. The light guide plate structure of claim 1, **characterized in that** sizes of the groove-shaped structures (111) from one side of the first end surface (11) to the other side of the first end surface (11) are from small to large.

6. The light guide plate structure of claim 1, **characterized in that** the groove-shaped structures (111) from one side of the first end surface (11) to the other side of the first end surface (11) are arranged from dense to sparse.

7. The light guide plate structure of claim 1, **characterized in that** distances between two adjacent ones of the prisms (121) arranged in the second end surface (12) are equal or unequal.

8. The light guide plate structure of claim 1, **characterized in that** heights of two adjacent ones of the prisms (121) are equal or unequal.

9. A display device, **characterized by** comprising the light guide plate structure of any one of claims 1-8.

10. An electronic device, **characterized by** comprising the display device of claim 9.

## Amended claims

### Amended claims in accordance with Rule 137(2) EPC.

1. A light guide plate structure, comprising:
a light guide plate (1), a first end surface (11) of the light guide plate (1) comprising a plurality of groove-shaped structures (111) disposed therein, the groove-shaped structures (111) configured to refract light emitted by a side light source (2), a second end surface (12) of the light guide plate (1) comprising a plurality of prisms (121) disposed therein, the prisms (121) configured to refract light emitted by the side light source (2), the groove-shaped structures (111), the prisms (121), and the light guide plate (1) being formed as an integrated structure, the first end surface (11) of the light guide plate (1) and the second end surface (12) of the light guide plate (1) being two opposite surfaces, and the second end surface (12) of the light guide plate (1) being close to a display panel (4), **characterized in that**:
the groove-shaped structures (111) include circular grooves and rectangular grooves.

2. The light guide plate structure of claim 1, **characterized in that** inner surfaces of the circular grooves are spherical surfaces.

3. The light guide plate structure of claim 1, **characterized in that** inner surfaces of the rectangular grooves are circular arcs.

4. The light guide plate structure of claim 1, **characterized in that** distances between two adjacent ones of the groove-shaped structures (111) are unequal or equal.

5. The light guide plate structure of claim 1, **characterized in that** sizes of the groove-shaped structures (111) from one side of the first end surface (11) to the other side of the first end surface (11) are from small to large.

6. The light guide plate structure of claim 1, **characterized in that** the groove-shaped structures (111) from one side of the first end surface (11) to the other side of the first end surface (11) are arranged from dense to sparse.

7. The light guide plate structure of claim 1, **characterized in that** distances between two adjacent ones of the prisms (121) arranged in the second end surface (12) are equal or unequal.

8. The light guide plate structure of claim 1, **characterized in that** heights of two adjacent ones of the prisms (121) are equal or unequal.

9. A display device, **characterized by** comprising the light guide plate structure of any one of claims 1-8.

10. An electronic device, **characterized by** comprising the display device of claim 9.
